# FASCICULE DE BREVET EUROPEEN

(11) **EP 0 779 783 B1**
(45) Date de publication et mention de la délivrance du brevet: **28.01.1998**
(21) Numéro de dépôt: 95930349.6
(22) Date de dépôt: 04.09.1995
(51) Int. Cl.: A23L 1/16

(54) **PATES ALIMENTAIRES ET PROCEDE POUR LEUR OBTENTION**
MEHRSCHICHTIGE TEIGWAREN UND VERFAHREN IHRER HERSTELLUNG
MULTILAYERED PASTA-TYPE PASTE AND METHOD FOR PRODUCING SAME

(30) Priorité: 02.09.1994 BE 9400790
(43) Date de publication de la demande: 25.06.1997
(73) Titulaire: NEVE de MEVERGNIES, Jean, 54190 Tiercelet (FR)
(72) Inventeur: NEVE de MEVERGNIES, Jean, 54190 Tiercelet (FR)
(74) Mandataire: Vanderperre, Robert
(86) Numéro de dépôt international: BE9500078
(87) Numéro de publication internationale: WO9607332

(56) Documents cités:
- EP-A- 0 203 321
- FR-A- 1 515 083
- GB-A- 2 010 658
- LU-A- 85 656
- PATENT ABSTRACTS OF JAPAN vol. 005 no. 041 (C-047) ,18 Mars 1981 & JP,A,55 165769 (FUSHIMI TAKAO) 24 Décembre 1980,

## Description

La présente invention se rapporte à des pâtes alimentaires garnies contenant au moins un ingrédient rapporté destiné à en modifier la saveur et comprenant une couche de base formée de semoules de blé dur et/ou de farines de céréales et d'eau.

Les pâtes alimentaires formées à partir d'une pâte constituée de semoules de blé dur ou tendre et/ou de farines de céréales et d'eau soumises à un laminage, le cas échéant suivi d'un séchage, sont connues. On trouve ainsi des produits présentant des surfaces planes, tels que des taillades ou lasagnes, etc.

Les pâtes alimentaires s'accommodent le plus fréquemment de sauces diverses. Afin de faire gagner du temps au consommateur, on rencontre sur le marché des emballages compartimentés contenant des pâtes alimentaires dans un compartiment et les ingrédients nécessaires à la préparation de la sauce, dans au moins un autre compartiment.

On rencontre également des pâtes alimentaires dans lesquelles sont incorporés divers ingrédients ou additifs comestibles réduits en poudre fine, tels que des épices ou des condiments : origan ou sauge etc., ou des légumes : tomates ou épinards, etc. Dans ce cas, les ingrédients précités sont incorporés dans la masse de pâte lors de la constitution initiale du mélange de semoule de blé et/ou de farine de céréales et d'eau, le cas échéant avec adjonction d'oeufs pour obtenir des pâtes aux oeufs.

On connaît également de LU-A-85656 des pâtes alimentaires présentant à leur surface des morceaux d'additifs ou d'ingrédients rapportés. Lesdits morceaux sont emprisonnés au moins partiellement dans la masse monobloc de la pâte. Avec ce tue de pâtes alimentaires, il y a un problème de dessertissage des morceaux lors de la cuisson. En outre, la répartition des ingrédients rapportés n'est pas uniforme, ce qui peut avoir une incidence déplaisante sur le goût et sur l'aspect, ainsi que sur la cohésion des zones de pâtes plus "chargées" que d'autres.

On connaît aussi des pâtes alimentaires où sont incorporés des morceaux ou fragments d'ingrédients plus importants par leurs dimensions et de densité supérieure à celle de la pâte et qui sont mélangés dans la masse de la pâte lors du pétrissage. Avec ce type de pâtes connu, le nombre de morceaux ou fragments apparents à la surface des pâtes ne peut qu'être relativement faible si on souhaite à la fois garder une cohésion satisfaisante du pâton monobloc et éviter une surcharge d'ingrédients rapportés pouvant engendrer un goût d'écoeurement.

L'invention a pour but de remédier aux inconvénients mentionnés ci-dessus. A cette fin, les pâtes alimentaires suivant l'invention comprennent au moins une couche supplémentaire constituée d'un mélange d'une pâte et du ou des ingrédients rapportés se superposant à la couche de base.

Ainsi, l'invention procure des pâtes alimentaires comportant des ingrédients rapportés tels que condiments ou épices directement incorporés aux pâtes de sorte qu'elles sont déjà épicées tout en assurant une tenue de chaque couche supplémentaire sur la feuille de pâte formant la couche de base par la présence de la pellicule de pâton qui applique les morceaux sur la surface de la feuille de pâte. L'accrochage des morceaux durs du pâton est donc assuré grâce à l'action de fixation de ceux-ci par l'application des couches supplémentaires formant pellicule plutôt que par l'enfoncement éventuel de ceux-ci dans la surface de la pâte. Ainsi, la couche de base peut être maintenue parfaitement homogène sans aucun corps étranger avec une cohésion interne parfaite et la tenue des morceaux rapportés pouvant présenter une densité nettement supérieure à celle des pâtes est assurée par les couches supplémentaires formant pellicule de retenue, assurant une parfaite mise en place desdits morceaux par rapport à la couche de base.

Avec le type de pâte alimentaire connu par le document LU-A-85656 précité, la couche de base elle-même contient déjà dans sa masse, des ingrédients rapportés, tels que des morceaux et additifs, contrairement à la présente invention où les ingrédients rapportés sont prévus à la surface de ladite couche de base, qui est homogène et dépourvue d'ingrédients rapportés, au moyen d'une couche supplémentaire respective. C'est cette couche supplémentaire qui assure à la fois la tenue et la visibilité des ingrédients rapportés.

Un autre avantage des pâtes alimentaires selon l'invention réside encore dans le fait que les ingrédients rapportés restent appliqués à la surface de la feuille de pâte même pendant et après la cuisson par la présence des couches supplémentaires formant pellicule de retenue des morceaux, ce qui prolonge la durée de diffusion des arômes des ingrédients rapportés et maintient l'effet esthétique dû à la disposition particulière.

Enfin, l'invention permet d'obtenir l'effet recherché d'une répartition en surface assez importante des ingrédients rapportés tout en gardant très raisonnables les proportions d'ingrédients rapportés ce qui permet d'éviter l'écoeurement dû à une surcharge d'ingrédients rapportés. La présence de la couche de base parfaitement homogène dépourvue d'ingrédients rapportés formant des hétéro-éléments assure une cohésion certaine à l'ensemble.

Lorsque le constituant pâteux de ladite couche supplémentaire est constitué des mêmes matières que ladite couche de base, on obtient même une meilleure tenue de la couche de base et de la ou des couches supplémentaires entre elles, notamment lors de la cuisson. Le comportement des diverses couches est le même et elles restent donc maintenues ensemble, même après cuisson. A cet égard, les rapports de matières sont, de préférence, les mêmes pour ledit constituant pâteux de chaque couche supplémentaire et pour ladite couche de base.

Une bonne tenue de la ou de chaque couche supplémentaire elle-même est assurée tout en réservant une proportion suffisamment importante d'ingrédients rapportés pour préserver les effets particuliers précités, lorsque ladite couche supplémentaire est composée entre 40% et 60%, de préférence environ 50% en poids, de ladite pâte et respectivement entre 60% et 40%, de préférence environ 50%, en poids d'ingrédients rapportés.

Une perception visuelle de la majeure partie du ou des ingrédients rapportés peut être obtenue en sélectionnant pour chaque couche supplémentaire une épaisseur sensiblement égale à l'épaisseur moyenne du ou des ingrédients rapportés.

De plus, chacune de ces couches supplémentaires forme une pellicule de mise en place desdits ingrédients rapportés par rapport à ladite couche de base.

En particulier, au moins l'une desdites couches supplémentaires contient des ingrédients rapportés sous forme de morceaux ou fragments répartis de manière sensiblement uniforme dans chaque couche supplémentaire.

En outre, par le mélange, les ingrédients rapportés sont répartis pratiquement uniformément dans ladite couche supplémentaire ce qui procure un effet gustatif agréable et homogène, sans surcharge locale de condiments ou épices. De plus, l'absence de surcharge locale et la répartition homogène s'avère favorable pour la tenue et la cohésion de ladite couche supplémentaire.

Ainsi, par la répartition uniforme des ingrédients rapportés, un effet esthétique est également obtenu par le fait qu'au moins la plus grande partie du ou des ingrédients rapportés précités est rendue visible à la surface des pâtes alimentaires ce qui peut les rendre plus attrayantes. En jouant sur la dimension, la densité, la nature et la forme des ingrédients rajoutés, on peut ainsi facilement obtenir un éventail très large de pâtes alimentaires.

Par ailleurs, selon l'effet esthétique désiré, l'une des couches supplémentaires précitées comprend au moins un ingrédient rapporté sous forme de pièce étendue entière telle qu'une feuille ou branche de légume ou au moins l'une desdites couches supplémentaires contient des fragments d'ingrédients rapportés répartis de manière sensiblement uniforme sur chaque couche supplémentaire, ou même les deux modes précités en combinaison. Plus particulièrement, chaque couche supplémentaire présente une épaisseur inférieure, de préférence nettement inférieure à l'épaisseur de la couche de base. En outre, la couche de base et/ou au moins l'une des couches supplémentaires précitées contiennent des ingrédients sous forme de fines particules de façon à conférer une teinte à chaque couche qui les contient.

Selon un mode de réalisation plus particulier encore, elles comprennent, entre la couche de base et chaque couche supplémentaire, au moins une couche intermédiaire. Ainsi, on peut obtenir un bouquet de parfums ayant le pouvoir de conférer un goût très subtil par la superposition de couches ayant chacune un parfum propre, lesdits parfums ne se mêlant entre eux que lors de la consommation des pâtes.

Dans un mode de réalisation spécifique de l'invention, chaque couche supplémentaire précitée forme une couche pelliculaire sur l'une des surfaces respectives de la couche de base appliquant au moins la plus grande partie du ou des ingrédients rapportés sur la couche de base en emprisonnant pratiquement entièrement ceux-ci.

Par l'emprisonnement des substances ou éléments hétérogènes constituant les ingrédients rapportés, une tenue parfaite de ceux-ci est obtenue en particulier pendant et après la cuisson des pâtes.

La présente invention se rapporte également à un procédé d'obtention des pâtes alimentaires ci-dessus.

Selon un mode de base du procédé, on effectue un mélange de la matière constituant la pâte de chaque couche supplémentaire et du ou des ingrédients rapportés de façon à obtenir une distribution pratiquement uniforme desdits ingrédients rapportés dans les couches supplémentaires, on applique chaque couche supplémentaire qui contient des hétéro-ingrédients sur la couche de base qui est dépourvue d'hétéro-ingrédients et on soumet la structure multicouche ainsi obtenue à un laminage de façon à obtenir une tenue entre lesdites couches qui résiste à la cuisson.

Plus particulièrement, on adjoint de l'humidité (vapeur ou eau) au mélange précité en fonction de la quantité relative d'ingrédients rapportés de façon à assurer un liant suffisamment souple à la couche supplémentaire pour que la cohésion de celle-ci soit assurée.

Lorsqu'on utilise la pièce rapportée entière, on effectue le mélange précité par agitation douce de façon à préserver l'intégrité de la pièce rapportée entière précitée.

De préférence, on effectue plusieurs laminages successifs des couches de façon à obtenir des pâtes alimentaires d'épaisseur finale désirée par paliers et progressivement. Ainsi, on évite les pertes de production dues à des ruptures de structure.

D'autres modes du procédé sont définis dans des sous-revendications supplémentaires.

D'autres avantages et particularités de l'invention ressortiront de la description de quelques modes de réalisation exemplaires de l'invention donnée ci-après et illustrée à l'aide des dessins annexés.

Les Fig. 1 et 2 illustrent chacune une vue en coupe transversale d'une lanière de pâte alimentaire selon l'invention.

Les Fig. 3 et 4 illustrent chacune une vue en plan d'une plaque de pâtes alimentaires de type lasagne selon l'invention.

La Fig. 5 illustre le procédé de préparation des pâtes alimentaires selon l'invention.

La Fig. 6 représente une portion de pâte alimentaire obtenue selon le procédé illustré sur la Fig. 5, à échelle agrandie.

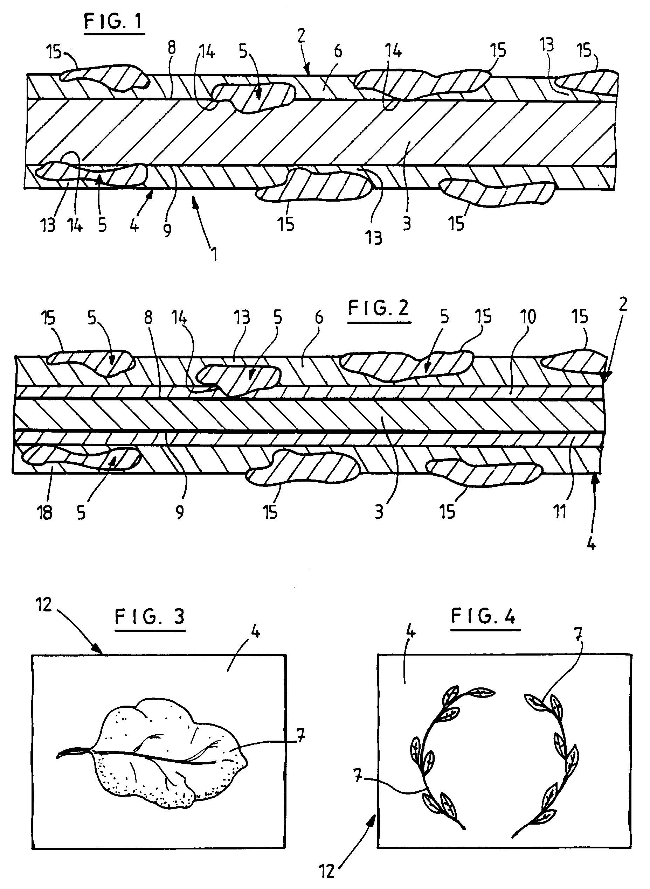

La lanière de pâte 1 illustrée sur la Fig. 1 présente une structure multicouche comprenant une couche de base 3 de type classique de composition traditionnelle telle qu'un mélange de semoule de blé dur et d'eau, et, sur au moins une de ses faces 8,9 une couche supplémentaire 2,4 ayant une composition particulière et se superposant à la couche de base 3. Ainsi, chaque couche supplémentaire 2, 4 est constituée d'un mélange d'une pâte 6 et d'ingrédients rapportés 5 formant ensemble un pâton. Les ingrédients rapportés 5 sont constitués par des hétéroéléments, tels que des épices ou condiments, comme des boules de poivre concassées, pilées ou même entières, du piment haché, de la sauge, des herbes de Provence et analogues formant des occlusions dans la pâte 6. Les ingrédients rapportés sont disposés de place en place dans la pâte 6.

Avantageusement, l'épaisseur de chaque couche supplémentaire 2,4 correspond sensiblement à l'épaisseur moyenne des ingrédients rapportés 5 ainsi qu'il ressort de la Fig. 1. Cela a pour effet d'une part qu'un bon accrochage 14 de chaque couche supplémentaire 2,4 à la couche de base 3 est obtenu améliorant ainsi considérablement la stabilité de la structure multicouche, et d'autre part pratiquement tous les ingrédients rapportés 5 inclus dans le pâton sont ainsi rendus apparents au moins dans les zones 15 en saillie par rapport à la pâte elle-même 6 de chaque couche supplémentaire 2,4 de manière parsemée à la surface de la lanière 1. Ainsi qu'il ressort clairement de la Fig. 1, les ingrédients rapportés sont partiellement ou totalement emprisonnés dans leurs couches supplémentaires respectives 2,4 de manière à être très visibles 15, tout en y étant suffisamment ancrés pour résister à un détachement lors de la cuisson de la pâte. Comme on le voit à la figure, certains morceaux sont logés sous une mince pellicule transparente superficielle 13 de pâte. Avantageusement, l'effet de transparence est obtenu par l'extrême minceur de la pellicule 13.

Avantageusement, le constituant pâteux 6 de chaque couche supplémentaire 2,4 est constitué des mêmes matières que la couche de base de façon à assurer une meilleure tenue de la lanière de pâte lors de la cuisson. De préférence même, les constituants pâteux de chaque couche supplémentaire 2,4 et de la couche de base 3 sont pratiquement identiques. Par exemple, la teneur en eau initiale est d'environ 25 à 30% en poids d'eau. Bien entendu, des oeufs peuvent également être adjoints à ce mélange de façon à obtenir des pâtes aux oeufs ainsi qu'il est bien connu.

La Fig. 2 illustre une variante de la lanière de pâte dans laquelle au moins une couche intermédiaire 10,11 de pâte dont la composition de base est avantageusement la même que celle des autres couches 2,3,4, est prévue entre la couche de base 3 et au moins l'une des couches supplémentaires 2,4. En conférant à chaque couche intermédiaire 10,11 un parfum particulier on peut ainsi obtenir un bouquet final très délicat.

Les Fig. 3 et 4 montrent une autre variante encore, dans laquelle au moins l'une des couches supplémentaires 2,4 comprend au moins une pièce rapportée entière 7. Ainsi, sur la Fig. 3 est illustrée une plaque de pâte 12 du type lasagne présentant une branche de légume 7 tel que d'épinard, ou de basilic, tandis que la Fig. 4 montre une plaque analogue 12 présentant deux branches d'herbes aromatiques telles que de la menthe ou de la sauge disposée en couronne de laurier. L'effet visuel ainsi obtenu est particulièrement heureux.

Par ailleurs, au moins l'une des couches précitées 2,3,4,10,11, en particulier les couches extérieures apparentes, peuvent également contenir des ingrédients sous forme de fines particules, par exemple à base de tomates, d'épinard, d'encre de seiche, etc. de façon à donner une certaine teinte à la couche qui les contient. Les opérations auxquelles la pâte de départ est soumise, notamment le pétrissage, ont pour effet de répartir les ingrédients sous forme de fines particules dans toute la masse de la pâte, en sorte que ces ingrédients, agissent comme un colorant sur l'aspect de la pâte. Ainsi, l'incorporation d'encre de seiche à la pâte initiale donne à celle-ci une teinte noirâtre uniforme.

Les pâtes alimentaires selon la présente invention sont obtenues par un procédé dans lequel on effectue un mélange de la matière constituant la pâte de la ou de chaque couche supplémentaire et du ou des ingrédients rapportés de façon à obtenir une distribution pratiquement uniforme desdits ingrédients rapportés, on applique la ou chaque couche sur la couche de base et on soumet la structure multicouche ainsi obtenue à un laminage de façon à obtenir une adhérence entre lesdites couches résistant à la cuisson. Par la composition des couches 2,4, un excellent accrochage des couches supplémentaires 2,4 à la couche de base est obtenu, la structure multicouche présentant ainsi une bonne stabilité comme indiqué ci-dessus. Par ailleurs, l'adhérence entre les couches est meilleure et la mise en oeuvre du laminage plus commode lorsque la composition de base de la pâte des couches est sensiblement la même.

Afin d'assurer une cohésion suffisante à chaque couche supplémentaire 2,4 dont la composition est hétérogène, il est avantageux d'adjoindre de l'humidité (vapeur ou eau) au mélange précité en fonction de la quantité relative d'ingrédients rapportés de façon à assurer un liant suffisamment souple à la couche supplémentaire. Ladite adjonction de vapeur ou d'eau favorise également l'étalement de la couche hétérogène.

Lorsqu'on utilise la pièce rapportée entière 7, on effectue le mélange précité par agitation douce de façon à préserver l'intégrité de la pièce rapportée entière précitée. Là aussi, un réglage adéquat de l'humidité s'avère utile.

Pour obtenir des pâtes alimentaires présentant une épaisseur finale désirée, on effectue plusieurs laminages successifs des couches et ce par palier. Le laminage progressif permet une confection en douceur ce qui évite des ruptures de la structure multicouche lors du laminage. Chaque laminage successif a pour effet de fixer un peu plus les morceaux et/ou fragments d'ingrédients rapportés 5 de sorte qu'en finale ceux-ci 5 se retrouvent solidement ancrés. Ainsi, même une cuisson prolongée des pâtes ne risque pas de provoquer un dégagement des occlusions 5 hors de leur pellicule d'emprisonnement 2,4 dans la structure multicouche 1 de pâte alimentaire.

L'épaisseur totale de la structure multicouche 1 varie par exemple entre 0,5 et 1 mm, de préférence entre 0,7 et 0,8 mm. Quant à chaque couche supplémentaire 2,4 formant pellicule, leur épaisseur propre (c'est-à-dire hors occlusions 5) est inférieure à par exemple 1/10 (un dixième) de l'épaisseur totale précitée, de préférence même nettement inférieure à 1/10.

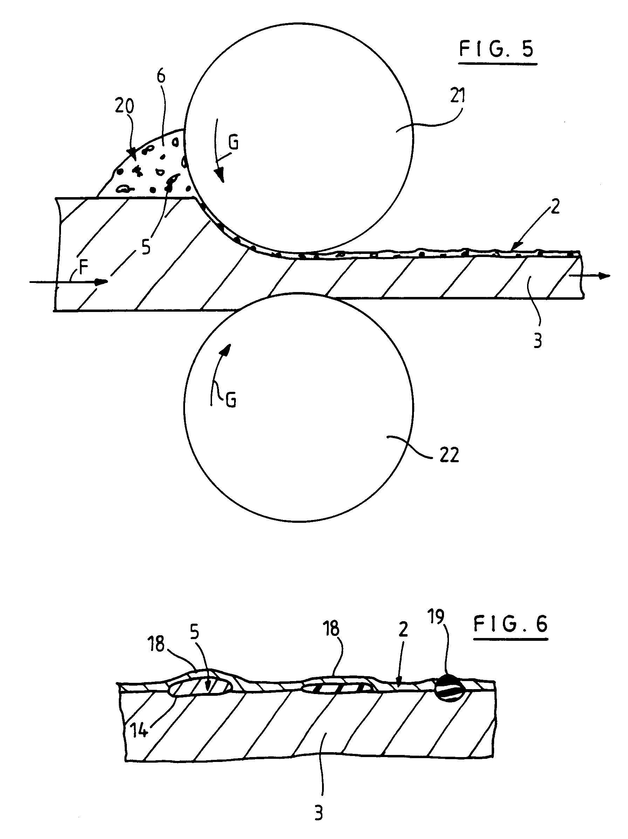

La Fig. 5 montre une paire de cylindres de laminage 21,22 des pâtes permettant la mise en oeuvre du procédé précité.

Ainsi, sur une feuille de pâte fraîche 3 laminée ou extrudée, on met en oeuvre un mélange ci-après dénommé "pâton" 20 comprenant pour partie des ingrédients en morceaux 5 ou en feuille et/ou en branche 7 plus ou moins durs et pour partie un mélange mou 6 d'une composition identique à la feuille de pâte 3 ou un mélange mou 6 d'une composition différente et qui peut être très variée.

L'humidité du pâton 20 est sensiblement plus élevée que l'humidité de la feuille de pâte 3.

Une masse de ce pâton 20 est déposée sur la feuille de pâte 3 juste en amont d'une paire de cylindres 21,22 dont l'écartement est réglé pour amincir la feuille. L'humidité du pâton 20 étant supérieure à celle de la feuille de pâte 3, celui-ci est "aspiré" ou entraîné par les cylindres 21,22 en même temps que la feuille 3 mais, de préférence, de manière inversement proportionnelle au gradient d'humidité entre la feuille 3 et le pâton 20, permettant d'ajuster l'épaisseur de la pellicule 2 et la répartition plus ou moins généreuse des morceaux 5.

Pour consolider l'accrochage et assurer une meilleure répartition des morceaux 5, la feuille 3 avec sa pellicule de pâton 2 peut encore être amincie par une ou plusieurs paires de cylindres supplémentaires agencés en aval.

Dans le procédé selon l'invention, on engage ainsi suivant la direction désignée par la flèche F, la couche de base 3, qui est dépourvue d'ingrédients rapportés 5,7 et est donc pratiquement homogène, entre la paire de cylindres 21, 22, tout en plaçant un pâton 20 sur la couche de base 3 en amont des cylindres 21, 22, le pâton 20 possédant quant à lui une composition hétérogène formée d'un mélange de pâton 6, identique ou non à celle de la couche de base 3, et d'ingrédients rapportés ou d'hétéro-ingrédients 5,7.

La structure obtenue après laminage par les cylindres 21, 22 est illustrée sur la Fig. 6. On y distingue la couche de base homogène 3 traditionnelle avec à sa surface des ingrédients rapportés 5,7 sous forme d'occlusions emprisonnées pratiquement entièrement par la mince couche supplémentaire 2,4 formant pellicule de retenue des ingrédients 5,7.

La mise en place des ingrédients rapportés sur la surface de la couche de base 3 est ainsi assurée, même après une cuisson prolongée des pâtes alimentaires. De plus, la minceur de la couche pelliculaire 2,4 est telle que l'effet visuel provoqué par les ingrédients rapportés est assuré, notamment par l'effet de transparence engendré par la minceur de la couche pelliculaire 2,4, notamment dans les zones de recouvrement total 18 ou partiel 19 desdits ingrédients 5,7 tournées vers l'extérieur. Par conséquent, tant la visualisation par le consommateur des ingrédients rapportés que la tenue de ceux-ci dans les pâtes alimentaires 1 sont parfaitement assurées.

## Revendications

1. Pâtes alimentaires contenant des ingrédients rapportés (5,7) sous forme d'hétéro-éléments ou d'occlusions et comprenant une couche de base (3) formée de semoules de blé dur et/ou de farines de céréales et d'eau, caractérisées en ce qu'elles comprennent au moins une couche supplémentaire hétérogène (2,4) constituée d'un mélange d'une pâte (6) et des ingrédients rapportés (5,7) se superposant à la couche de base (3) laquelle est sensiblement homogène et dépourvue d'ingrédients rapportés (5,7).

2. Pâtes alimentaires suivant la revendication 1, caractérisées en ce que le constituant pâteux (6) de ladite couche supplémentaire (2,4) est constitué des mêmes matières que ladite couche de base (3).

3. Pâtes alimentaires suivant la revendication 2, caractérisées en ce que les rapports de matières sont les mêmes pour ledit constituant pâteux (6) de la couche supplémentaire (2,4) et pour ladite couche de base (3).

4. Pâtes alimentaires suivant l'une quelconque des revendications 1 à 3, caractérisées en ce que ladite couche supplémentaire (2,4) est composée entre 40% et 90%, de préférence environ 60%, en poids de ladite pâte (6) et respectivement entre 60% et 10%, de préférence environ 40%, en poids d'ingrédients rapportés (5,7).

5. Pâtes alimentaires suivant l'une quelconque des revendications précédentes, caractérisées en ce que chaque couche supplémentaire (2,4) présente une épaisseur sensiblement égale à l'épaisseur moyenne du ou des ingrédients rapportés (5,7), de façon à former une pellicule de mise en place desdits ingrédients rapportés par rapport à ladite couche de base (3).

6. Pâtes alimentaires suivant l'une quelconque des revendications 1 à 5, caractérisées en ce qu'au moins l'une desdites couches supplémentaires (2,4) contient des ingrédients rapportés (5) sous forme de morceaux ou fragments répartis de manière sensiblement uniforme dans chaque couche supplémentaire.

7. Pâtes alimentaires suivant l'une quelconque des revendications 1 à 6, caractérisées en ce qu'au moins l'une des couches supplémentaires (2,4) précitées comprend au moins un ingrédient rapporté sous forme de pièce étendue entière (7) telle qu'une feuille ou branche de légume.

8. Pâtes alimentaires suivant la revendication 7 lorsqu'elle dépend de la revendication 6, caractérisées en ce qu'elles comportent une couche supplémentaire (2,4) sur chaque face (8,9) de ladite couche de base (3), l'une des couches supplémentaires (2) ou (4) contenant au moins une pièce rapportée entière (7), et la couche supplémentaire opposée (4) ou (2) contenant des fragments d'ingrédients rapportés (5) répartis de manière sensiblement uniforme.

9. Pâtes alimentaires suivant l'une quelconque des revendications précédentes, caractérisées en ce que la couche de base (3), et/ou au moins l'une des couches supplémentaires précitées (2,4) contiennent des ingrédients sous forme de fines particules de façon à conférer une teinte à chaque couche (2,3,4) qui les contient.

10. Pâtes alimentaires suivant l'une quelconque des revendications précédentes, caractérisées en ce qu'elles comprennent, entre la couche de base (3) et la ou chaque couche supplémentaire (2,4) au moins une couche intermédiaire (10,11).

11. Pâtes alimentaires suivant l'une quelconques des revendications 1 à 10, caractérisées en ce que chaque couche supplémentaire (2,4) forme une couche pelliculaire sur l'une des surfaces respectives de la couche de base (3), appliquant au moins la plus grande partie du ou des ingrédients rapportés (5) sur la couche de base en emprisonnant pratiquement entièrement ceux-ci.

12. Procédé d'obtention de pâtes alimentaires suivant l'une quelconque des revendications précédentes, caractérisé en ce qu'on effectue un mélange de la matière constituant la pâte (6) de la ou de chaque couche supplémentaire (2,4) et du ou des ingrédients rapportés (5) de façon à obtenir une distribution pratiquement uniforme desdits ingrédients rapportés, en ce qu'on applique la ou chaque couche supplémentaire (2,4) sur la couche de base et en ce qu'on soumet la structure multicouche ainsi obtenue à un laminage de façon à obtenir une adhérence entre lesdites couches résistant à la cuisson.

13. Procédé suivant la revendication précédente, caractérisé en ce qu'on applique sur une feuille de pâte fraîche laminée ou extrudée formant ladite couche de base (3), un mélange dénommé pâton (20) comprenant pour partie des ingrédients rapportés en morceaux (5) et/ou en feuilles (7) et/ou en branches (7) d'une part, et pour partie un mélange mou (6) d'une composition identique à la feuille de pâte précitée (3) d'autre part.

14. Procédé suivant la revendication 12, caractérisé en ce qu'on applique sur une feuille de pâte fraîche laminée ou extrudée formant ladite couche de base (3), un mélange dénommé pâton (20) comprenant pour partie des ingrédients rapportés en morceaux (5) et/ou en feuilles (7) et/ou en branches (7) d'une part, et pour partie un mélange mou (6) d'une composition différente à la feuille de pâte précitée (3) d'autre part.

15. Procédé suivant l'une des revendications 12 à 14, caractérisé en ce qu'une masse du pâton précité (20) est déposée sur la feuille de pâte précitée (3) juste en amont d'une paire de cylindres (21, 22) dont l'écartement est réglé de façon à amincir la structure multicouche sortante (F).

16. Procédé suivant l'une quelconque des revendications 12 à 15, caractérisé en ce qu'on adjoint de l'humidité (vapeur ou eau) au mélange précité constituant chaque couche supplémentaire (2,4) en fonction de la quantité relative d'ingrédients rapportés (5,7) de façon à assurer un liant souple pour la couche supplémentaire respective (2,4).

17. Procédé suivant la revendication 16, caractérisé en ce que l'on adjoint un taux d'humidité nettement plus élevé à chaque couche supplémentaire (2,4) par rapport à la couche de base (3), au moment de la superposition des couches (2,3,4).

18. Procédé suivant la revendication précédente, caractérisé en ce que le pâton (20), est entraîné (G) par les cylindres précités (21, 22) en même temps que la feuille de pâte formant couche de base (3), à raison inverse du gradient d'humidité entre la feuille (3) et le pâton (20).

19. Procédé suivant la revendication précédente, caractérisé en ce que l'entraînement précité est effectué à raison inversement proportionnelle par rapport au gradient d'humidité précité.

20. Procédé suivant l'une des revendications 12 à 19 dans lequel on utilise la pièce rapportée entière (7) suivant la revendication 7, caractérisé en ce qu'on effectue le mélange précité de chaque couche supplémentaire (2,4) par agitation douce de façon à préserver l'intégrité de la pièce rapportée entière précitée (7).

21. Procédé suivant l'une quelconque des revendications 12 à 20, caractérisé en ce qu'on effectue plusieurs laminages successifs des couches (2,3,4), de façon à obtenir une structure multicouche des pâtes alimentaires d'épaisseur finale désirée par paliers et progressivement et à consolider l'accrochage desdits ingrédients rapportés (5,7).

## Claims

1. Alimentary pastes containing added ingredients (5, 7) in the form of heteroelements or occlusions and comprising a base layer (3) formed from durum wheat semolina and/or cereals flours and water, characterised in that they comprise at least one additional heterogeneous layer (2, 4), which is formed from a mixture of a dough (6) and the added ingredients (5, 7) and which is superimposed on the base-layer (3), wherein the latter is substantially homogeneous and free from added ingredients (5, 7).

2. Alimentary pastes according to Claim 1, characterised in that the pasty component (6) of said additional layer (2, 4) is formed by the same materials as said base layer (3).

3. Alimentary pastes according to Claim 2, characterised in that said pasty component (6) of the additional layer (2, 4) and said base layer (3) have the same material ratios.

4. Alimentary pastes according to any one of the Claims 1 to 3, characterised in that said additional layer (2, 4) is composed from 40 to 90% by weight, preferably approximately 60% by weight, of said dough (6) and respectively from 60 to 10% by weight, preferably approximately 40% by weight of added ingredients (5, 7).

5. Alimentary pastes according to any one of the preceding Claims, characterised in that each additional layer (2, 4) has a thickness substantially equal to the average thickness of said added ingredients (5, 7) so as to form a film for setting said added ingredients with respect to said base layer (3).

6. Alimentary pastes according to any one of the Claims 1 to 5, characterised in that at least one of said additional layers (2, 4) contains added ingredients (5) in the form of pieces or fragments so as to be allocated substantially uniformly in each additional layer.

7. Alimentary pastes according to any one of the Claims 1 to 6, characterised in that at least one of said additional layers (2, 4) comprises at least one added ingredient in the form of an entire extended piece (7), such as a leaf or a vegetable branch.

8. Alimentary pastes according to Claim 7, when it depends on Claim 6, characterised in that they include an additional layer (2,4) on each surface (8, 9) of said base layer (3), one of the additional layers (2) or (4) containing at least one entire added piece (7) and the opposite additional layer (4) or (2) containing fragments of added ingredients (5) which are allocated substantially uniformly.

9. Alimentary pastes according to any one of the preceding Claims, characterised in that the base layer (3), and/or at least one of said additional layers (2,4) contain ingredients in the form of fines particles so as to provide a colour to each layer (2, 3, 4) containing the latter.

10. Alimentary pastes according to any one of the preceding Claims, characterised in that they comprise at least one intermediate layer (10, 11), between the base layer (3) and each additional layer (2, 4).

11. Alimentary pastes according to any one of the Claims 1 to 10, characterised in that each additional layer (2, 4) forms a film layer on one of the respective surfaces of the base layer (3) setting at least the largest part of said added ingredients (5) on the base layer enclosing substantially completely the latter.

12. Process for producing alimentary pastes according to any one of the preceding Claims, characterised in that the mixture is made of the material forming the paste (6) of each additional layer (2,4) and of the added ingredients (5) so as to obtain a substantially uniform distribution of said added ingredients, in that each additional layer (2,4) is applied on the base layer and in that the multilayer structure thus produced is laminated so as to obtain an adhesion between said layers resisting to boiling.

13. Process according to the preceding Claim, characterised in that there is applied on a laminated or extruded sheet of fresh paste forming said base layer (3), a mixture forming a paste like ball as a so-called lump (20) containing on the one hand partly added ingredients in pieces (5) and/or in leaves (7) and/or in branches (7') and on the other hand partly a soft mixture (6) of a composition which is the same as the sheet of said paste (3).

14. Process according to Claim 12, characterised in that there is applied on a sheet of laminated or extruded fresh paste forming said base layer (3), a mixture called lump (20) comprising on the one hand partly added ingredients in pieces (5) and/or in leaves (7) and/or in branches (7') and on the other hand partly a soft mixture (6) having a different composition from the sheet of said paste (3).

15. Process according to one of Claims 12 to 14, characterised in that a mass of said lump (20) is brought onto the sheet of said paste (3) just upstream of a pair of cylinders (21, 22) the spacing of which is set so as to make thinner the outgoing multilayer structure (F).

16. Process according to any one of the Claims 12 to 15, characterised in that there is added some moisture (steam or water) to said mixture forming each additional layer (2, 4) depending on the relative quantity of added ingredients (5, 7) so as to provide a supple binding compound for the respective additional layer (2, 4).

17. Process according to Claim 16, characterised in that there is added a substantially higher moisture rate to each additional layer (2, 4), with respect to the base layer (3), when superposing the layers (2, 3, 4).

18. Process according to the preceding Claim, characterised in that the lump (20) is drawn (G) by said cylinders (21, 22) simultaneously with the sheet of paste forming said base layer (3), reversely proportional to the moisture gradient between the sheet (3) and the lump (20).

19. Process according to the preceding Claim, characterised in that said drawing is carried out reversely proportional with respect to said moisture gradient.

20. Process according to one of the Claims 12 to 19, wherein the entire added piece (7) according to Claim 7 is used, characterised in that said mixture of each additional layer (2, 4) is done by smooth shaking so as to preserve the integrity of said entire added piece (7).

21. A process according to any one of the Claims 12 to 20, characterised in that the layers (2, 3, 4) are successively laminated several times so as to obtain stepwise and progressively a multilayer structure of alimentary pastes having a desired final thickness and to consolidate the hooking of said added ingredients (5, 7).

## Patentansprüche

1. Teigwaren, die beigefügte Zutaten (5, 7) in Form von verschiedenartigen Elementen oder Einschlüssen enthalten und eine Basisschicht (3) aus Hartweizen-Grieß und/oder Getreidemehl und Wasser aufweisen, dadurch gekennzeichnet, daß sie mindestens eine zusätzliche heterogene Schicht (2, 4) aufweisen, die aus der Mischung eines Teigs (6) und der beigefügten Zutaten (5, 7) besteht und auf der Basisschicht (3) aufliegt, welche im wesentlichen homogen ist und keine beigefügten Zutaten (5, 7) aufweist.

2. Teigwaren nach Anspruch 1, dadurch gekennzeichnet, daß der teigförmige Bestandteil (6) der zusätzlichen Schicht (2, 4) aus den gleichen Stoffen wie die Basisschicht (3) besteht.

3. Teigwaren nach Anspruch 2, dadurch gekennzeichnet, daß der teigförmige Bestandteil (6) der zusätzlichen Schicht (2, 4) und die Basisschicht (3) die gleichen Beifügungen von Stoffen aufweisen.

4. Teigwaren nach einem beliebigen der Ansprüche 1 bis 3, dadurch gekennzeichnet, daß die zusätzliche Schicht (2, 4) zusammengesetzt ist aus zwischen 40 und 90, vorzugsweise etwa 60 Gew.% des Teigs (6) und zwischen 60 und 10, vorzugsweise etwa 40 Gew.% der beigefügten Zutaten (5, 7).

5. Teigwaren nach einem beliebigen der vorhergehenden Ansprüche, dadurch gekennzeichnet, daß jede zusätzliche Schicht (2, 4) eine Dicke im wesentlich gleich der mittleren Dicke der beigefügten Zutat oder Zutaten (5, 7) aufweist, um einen dünnen Überzug zum Aufbringen dieser beigefügten Zutaten auf die Basisschicht (3) zu bilden.

6. Teigwaren nach einem beliebigen der Ansprüche 1 bis 5, dadurch gekennzeichnet, daß mindestens eine der zusätzlichen Schichten (2, 4) beigefügte Zutaten (5) in Form von Stückchen oder Bruchteilen enthält, die im wesentlichen gleichmäßig in jeder zusätzlichen Schicht verteilt sind.

7. Teigwaren nach einem beliebigen der Ansprüche 1 bis 6, dadurch gekennzeichnet, daß mindestens eine der vorgenannten zusätzlichen Schichten (2, 4) mindestens eine beigefügte Zutat in Form eines ausgestreckt liegenden ganzen Stücks (7) wie z.B. eines Gemüseblatts oder - zweigs aufweist.

8. Teigwaren nach Anspruch 7, wenn er sich auf Anspruch 6 bezieht, dadurch gekennzeichnet, daß sie auf jeder Seite (8, 9) der Basisschicht (3) eine zusätzliche Schicht (2, 4) besitzen, wobei eine der zusätzlichen Schichten (2) oder (4) mindestens ein ganzes beigefügtes Stück (7) und die entgegengesetzte zusätzliche Schicht (4) oder (2) Bruchstücke von beigefügten Zutaten (5) enthält, die im wesentlichen gleichmäßig verteilt sind.

9. Teigwaren nach einem beliebigen der vorhergehenden Ansprüche, dadurch gekennzeichnet, daß die Basisschicht (3) und/oder mindestens eine der erwähnten zusätzlichen Schichten (2, 4) Zutaten in Form von feinen Teilchen aufweisen, um jeder sie enthaltenden Schicht (2, 3, 4) eine Färbung zu verleihen.

10. Teigwaren nach einem beliebigen der vorhergehenden Ansprüche, dadurch gekennzeichnet, daß sie zwischen der Basisschicht (3) und der oder jeder zusätzlichen Schicht (2, 4) mindestens eine Zwischenschicht (10, 11) aufweisen.

11. Teigwaren nach einem beliebigen der Ansprüche 1 bis 10, dadurch gekennzeichnet, daß jede zusätzliche Schicht (2, 4) auf einer der Flächen der Basisschicht (3) eine dünne Überzugschicht bildet, durch die zumindest der größte Teil der beigefügten Zutat oder Zutaten (5) auf die Basisschicht aufgelegt und praktisch vollständig eingeschlossen wird.

12. Verfahren zur Herstellung von Teigwaren gemäß einem beliebigen der vorhergehenden Ansprüche, dadurch gekennzeichnet, daß man den den Teig (6) der oder jeder zusätzlichen Schicht (2, 4) bildenden Stoff und die beigefügte Zutat oder Zutaten (5) vermischt, um eine praktisch gleichmäßige Verteilung der beigefügten Zutaten zu erhalten, daß man die oder jede zusätzliche Schicht (2, 4) auf die Basisschicht auflegt und daß man die so erhaltene Vielschichten-Struktur einem Walzvorgang unterzieht, um eine kochfeste Haftung zwischen den Schichten zu erreichen.

13. Verfahren nach dem vorhergehenden Anspruch, dadurch gekennzeichnet, daß man auf ein ausgewalztes oder gespritztes Blatt aus frischem Teig, das die Basisschicht (3) bildet, eine Teigwurst (20) genannte Mischung auflegt, die einerseits als Teilmenge beigefügte Zutaten in Stücken (5) und/oder Blättern (7) und/oder Zweigen (7) und andererseits als Teilmenge eine weiche Mischung (6) einer identischen Zusammensetzung wie das Teigblatt (3) aufweist.

14. Verfahren nach Anspruch 12, dadurch gekennzeichnet, daß man auf ein ausgewalztes oder gespritztes Blatt aus frischem Teig, das die Basisschicht (3) bildet, eine Teigwurst (20) genannte Mischung aufbringt, die einerseits als Teilmenge beigefügte Zutaten in Stücken (5) und/oder Blättern (7) und/oder Zweigen (7) und andererseits als Teilmenge eine weiche Mischung (6) einer Zusammensetzung aufweist, die sich von der des erwähnten Teigblatts (3) unterscheidet.

15. Verfahren nach einem der Ansprüche 12 bis 14, dadurch gekennzeichnet, daß eine Masse der erwähnten Teigwurst (20) auf das vorgenannte Teigblatt (3) kurz vor einem Paar von Zylindern (21, 22) aufgelegt wird, deren Abstand so eingestellt ist, daß die daraus hervorgehende Vielschichten-Struktur (F) verdünnt wird.

16. Verfahren nach einem beliebigen der Ansprüche 12 bis 15, dadurch gekennzeichnet, daß man der erwähnten Mischung, die jede zusätzliche Schicht (2, 4) bildet, Feuchtigkeit (Dampf oder Wasser) in Abhängigkeit von der relativen Menge an beigefügten Zutaten (5, 7) zugibt, um ein geschmeidiges Bindemittel für die jeweilige zusätzliche Schicht (2, 4) zu gewährleisten.

17. Verfahren nach Anspruch 16, dadurch gekennzeichnet, daß man einen Feuchtigkeitsgehalt zusetzt, der zum Zeitpunkt des Übereinanderlegens der Schichten (2, 3, 4) in jeder zusätzlichen Schicht (2, 4) wesentlich höher ist als in der Basisschicht (3).

18. Verfahren nach dem vorhergehenden Anspruch, dadurch gekennzeichnet, daß die Teigwurst (20) von den erwähnten Zylindern (21, 22) zur gleichen Zeit wie das die Basisschicht (3) bildende Teigblatt im umgekehrten Verhältnis zum Feuchtigkeitsgradienten zwischen dem Blatt (3) und der Teigwurst (20) angetrieben wird (G).

19. Verfahren nach dem vorhergehenden Anspruch, dadurch gekennzeichnet, daß der erwähnte Antrieb umgekehrt proportional zum erwähnten Feuchtigkeitsgradienten erfolgt.

20. Verfahren nach einem der Ansprüche 12 bis 19, bei dem man das beigefügte ganze Stück (7) gemäß Anspruch 7 verwendet, dadurch gekennzeichnet, daß man die erwähnte Mischung jeder zusätzlichen Schicht (2, 4) durch sanftes Umrühren durchführt, damit das beigefügte ganze Stück (7) intakt bleibt.

21. Verfahren nach einem beliebigen der Ansprüche 12 bis 20, dadurch gekennzeichnet, daß man die Schichten (2, 3, 4) mehreren aufeinanderfolgenden Walzvorgängen unterwirft, um stufenweise und progressiv eine Vielschichten-Struktur der Teigwaren mit der gewünschten Enddicke zu erhalten, und um die Haftung der beigefügten Zutaten (5, 7) zu verfestigen.
